# EUROPEAN PATENT APPLICATION

(11) **EP 1 962 471 A1**
(43) Date of publication of application: **27.08.2008**
(21) Application number: 07290223.2
(22) Date of filing: 21.02.2007
(51) Int. Cl.: H04L 29/06

(54) **Method of providing an access to a real-time service**

(71) Applicant: Alcatel Lucent, 75008 Paris (FR)
(72) Inventor: Oberle, Karsten, 68199 Mannheim (DE); Kessler, Marcus, 70329 Stuttgart (DE)
(74) Representative: Zinsinger, Norbert

(57) **Abstract**

The invention concerns a method of providing a subscriber with an access to a real-time service, whereby said access is via one (304) of a plurality of two or more access networks (302, 303, 304), and a subscriber terminal (301), a server (390) and a computer program product to execute this method. The subscriber uses a terminal (301) having connectivity to the plurality of access networks (302, 303, 304). One or more service request messages (321, 331, 341) are sent from the subscriber terminal (301) via one or more of the plurality of access networks (302, 303, 304) to the application provider. The application provider selects one access network (304) of the plurality of access networks (302, 303, 304). The access to the real-time service is established via the selected access network (304).

## Description

The present invention relates to the field of providing a subscriber with access to a real-time service whereby the access is via an access network selected from a plurality of two or more access networks, and a terminal, a server and a computer program product to execute a corresponding method.

A calling subscriber can choose among a number of different terminals to access a service like, e.g., a communication with another subscriber. The selection of a terminal, e.g., a fixed telephone, a mobile telephone, a PDA, a PC with an email application, also determines the communication mode (voice, text, email, chat, multimedia, etc.), the communication quality, and the costs for the corresponding communication (PDA = Personal Digital Assistant, PC = Personal Computer; VolP = Voice over Internet Protocol). Dependent on a chosen network provider, the quality of the service and the charges associated with the service may vary a great deal. The provision of real-time communications over IP-based networks has even increased the varieties and differences a subscriber is faced with.

EP 0 297 616 B2 deals with a mobile terminal usable in differing network systems. It describes a computerized subscriber radio equipment comprising different software elements which allows an operation across the borders of mobile radio networks featuring incompatible systems and/or frequencies. Triggered by a too-low field-strength in a network, the radio equipment automatically switches from a first software element to a next, better appropriate software element such that the field-strength increases and operation is possible, again.

Methods exist for the selection of appropriate communication terminals and communication modes.

For example, EP 1 443 727 A1 describes a first data processing system dedicated to a calling user and a second data processing system dedicated to a called user, for setting up a communication connection between the calling user and the called user through a communications network. Each of the users has access to the network by means of two or more terminals of different types, e.g., a fixed and a mobile phone, Internet telephony, etc. The data processing systems communicate with each other via the network and negotiate for determining appropriate terminals for the intended connection.

Likewise, EP 1 469 660 A1 describes a method of setting up a call between a calling user and a called user, each of the users having at least one communication terminal. A first communication equipment associated with the terminals of the calling user and a second communication equipment associated with the terminals of the called user exchange information for setting up the call. The second communication equipment determines each terminal (fixed telephone, mobile phone, PDA, PC, etc.) of the called user and corresponding communication modes (voice, video, email, chat, etc.) that would enable setting up of the requested call and identifies the determined terminals and modes to the first communication equipment. The first communication equipment then selects one terminal and a corresponding mode and initiates the setting up of the call.

It is the object of the present invention to provide an improved access to a real-time service.

The object of the present invention is achieved by a method of providing a subscriber having connectivity to a plurality of two or more access networks with an access to a real-time service provided by an application provider, said access being via one of the plurality of access networks, whereby the method comprises the steps of sending one or more service request messages from the subscriber via one or more of the plurality of access networks to the application provider, selecting by the application provider one access network of the plurality of access networks, and establishing the access to the real-time service via the selected access network. The object of the present invention is further achieved by a subscriber terminal having connectivity to a plurality of two or more access networks for providing a subscriber with an access to a real-time service provided by an application provider, said access being via one of the plurality of access networks, whereby the subscriber terminal comprises a control unit adapted to send one or more service request messages via one or more of the plurality of access networks to the application provider for initiating a selection of one access network of the plurality of access networks by the application provider and an establishment of the access to the real-time service via the selected access network. Furthermore, the object of the present invention is achieved by a server associated with an application provider for providing a subscriber having connectivity to a plurality of two or more access networks with an access to said real-time service, said access being via one of the plurality of access networks, whereby the server comprises a customer service logic unit adapted to select, after a reception of one or more service request messages from the subscriber via one or more of the plurality of access networks, one access network of the plurality of access networks and initiate the establishment of the access to the real-time service via the selected access network. And, the object of the present invention is achieved by a computer program product for providing a subscriber having connectivity to a plurality of two or more access networks with an access to a real-time service provided by an application provider, said access being via one of the plurality of access networks, whereby the computer program product, when executed by a server of the application provider, performs the steps of selecting one access network of the plurality of access networks after receipt of one or more service request messages from the subscriber via one or more of the plurality of access networks by the application provider and initiating the establishment of the access to the real-time service via the selected access network.

An application provider may synonymously also be called application service provider (= ASP). A provider/operator of an access network may also be called network access provider (= NAP).

Connectivity of a subscriber to a network means that the subscriber has a possibility to use the network as a transmission medium for the exchange of data with a communication partner. A subscriber can has connectivity to two or more networks that offer service for the position where the subscriber's terminal is located, i.e., the terminal can be connected to any of these networks according to the choice of the terminal user. A terminal may have connectivity to a plurality of access networks, i.e., networks that provide access to one or multiple core IP networks (e.g. network service providers, NSP's). The ASP which provides the application/service is an overlay One top of this NSP(s).

In particular, real-time services are services for the provision of streaming media, e.g., a live telecommunication such as a telephone call, telephone conference, VolP communications, video-conference, VoD and AoD services, etc. (VoD = Video on Demand; AoD = Audio on Demand).

The present invention relieves the subscriber from the burden to decide in advance, i.e., before initiating a real-time service, which access network to choose. The server associated with the application provider significantly simplifies the process of setting up a session for the subscriber.

The choice of an access network determines the quality of a service and the charges for usage of the access network. The application provider keeps updated information about the quality and cost associated with a specific access network and chooses the access network best suited for the subscriber and the intended service. Thus, the invention provides a very comfortable solution for a subscriber when connected to multiple different networks with different charges.

A modern multi-homed device, i.e., a terminal connecting multiple different access technologies (e.g. WLAN, 3G, DSL, etc.), requires a selection of an access network (WLAN = Wireless Local Area Network; 3G = Third Generation; DSL = Digital Subscriber Line). The invention selects a "best suited" access network in behalf of the subscriber. For example, for a dedicated SIP-based conversational real-time service, such as VolP or MMoIP, in NGN/IMS/TISPAN systems, the server according to the invention provides for the set-up and control of this session (MMoIP = Multimedia over Internet Protocol; NGN = Next Generation Networking; IMS = IP Multimedia Subsystem; TISPAN = Telecommunications & Internet converged Services & Protocols for Advanced Networks).

The invention provides a method to enable the application provider (Application Service Provider = ASP) offering the respective real-time service to select the access network to be used in behalf of the user as a special customer service. The ASP has a motivation to provide that "access network selection service" to the subscriber/customer as the ASP is paid for a dedicated customer service independently of the used transport or selected access network. Even in case that the ASP is also a NAP (= Network Access Provider) operating one of the access network, the selection method is of high interest, since the main source of revenues has to be seen in offering lucrative value added services and not in transport.

The present invention offers a broad applicability. Providers of NGN/IMS solutions can offer this service specific access network selection as a service capability to their customers (= ASPs) and as a consequence to the subscribers of the ASPs.

Further advantages are achieved by the embodiments of the invention indicated by the dependent claims.

According to a preferred embodiment of the invention, the subscriber terminal sends via each of the plurality of access networks a service request message from the subscriber to the server associated with the application provider. The service request message is generated by the subscriber's terminal on initiating by the subscriber a service request indication on the terminal. The service request message defines the service a subscriber wishes to use, e.g. by specifying the subscriber, the service and the service provider. For instance, the subscriber hooks off the telephone and dials a telephone number. Then the terminal generates a signalling message, i.e., the service request message, that is sent to the access network and routed to a terminal associated with the dialled telephone number.

The server receives the service request messages via the plurality of access networks. The server analyses the service request messages and determines the requested service. After selection of the access network which is "best suited" for the requested service by the server, the server processes the service request message received via said selected access network and terminates the service request messages received via the other access networks.

According to another preferred embodiment of the invention, the subscriber terminal sends via one of the plurality of access networks a service request message from the subscriber to the server associated with the application provider. The server receives the service request message via the one access network and initiates the establishment of a service session corresponding to the received service request message. The session is a logic connection between two addressable entities in the networks for the purpose of data exchange. If the requested service session is a live audio communication of the subscriber with another communication partner, the session will be established between the subscriber and the communication partner.

At first, the service session is established on a route via said one access network used for the sending of the service request message. That means that the signalling/traffic associated with the real-time service flows between the subscriber and application provider on a route through the one access network used for the sending of the service request message.

Associated with the establishment of the service session, the server determines the access network which is "best suited" for the requested service. Preferably, the selection/determination process starts as soon as the server receives a service request message from the subscriber. The subscriber wants his service request to be responded without delay or because the terminal is not capable to send parallel multiple service requests. Therefore, the server temporarily establishes the requested service via the access network the service request was received through. In parallel to or after the establishment of the service session, the server accesses information which allows it to select an access network which is - according to the server - the "best suited" access network in this very case, i.e., for the requested service and the particular subscriber.

If the selected/determined "best suited" access network is not equal to the access network used for the sending of the service request message, the server changes the route of the running service session: the service session is rerouted so that the session-related signalling/traffic data does not flow any more through said one access network that was used for the sending of the service request message but instead flows through the selected access network. In other words, the server initiates a route transfer of the running service session to the determined/selected access network. The server provides for an adaptation of the nodes involved in the directing/routing of the service session and/or the data addresses of the data packets used for the session in a way that the corresponding session data traffic and signalling/control traffic takes a path via the selected access network. The route transfer of the running service session to the determined access network is done using session-mobility means, e.g., a session hand-over mechanism. Thus, the subscriber leads the service session under the conditions (QoS, charges, etc.) of the provider of the selected access network chosen by the server as the "best suited" access network.

On the other hand, if the determined/selected "best suited" access network is identical to the access network used for the sending of the service request message, the server keeps/maintains the route of the running service session through the current access network without any change.

Preferably, the selection process executed by the server for the selection of an access network is a dynamic and adaptive process. A selection of an access network may be revised and revoked if the conditions of an access network change or become unattractive during an on-going session. Especially if the service session, e.g. a VoD session, takes a longer time and thus is likely to imply significant costs for the subscriber, it may be benefiting for the subscriber to take advantage of even tiny price differences between competing NAPs. The server determines on its own one or more time steps when it is advantageous for the subscriber to change an access network and initiates the change of the access networks during the on-going session without the subscriber noticing it, e.g., using session-mobility means.

According to another preferred embodiment of the invention, the server of the application provider determines, on receipt of the one or more service request messages, said one "best suited" access network based on selection criteria. The selection criteria may comprise subscriber preferences stored in a data base. The server may have access to a subscriber database, e.g., comprised within a Home Subscriber Server (= HSS) where the subscriber profile for that service is stored. In this HSS, the subscriber can for instance set preferences about the service selection, like always "cheapest connection", always "best quality", etc. The selection criteria may also comprise provider preferences provided to the server, e.g., stored in a data base accessible by the ASPs. An ASP may recommend a specific QoS for one of his services, e.g., to deliver a high fidelity media content to a subscriber. The server allows for these provider preferences when selecting a "best suited" access network.

It is also possible that the NAP provide preferences or selection recommendations to the server: a NAP may operate an access network which is best used with a specific device setting. The server looks up the capabilities of the subscriber terminal, e.g., stored in the HSS, and decides whether the access network comes into question for the subscriber terminal.

Furthermore, the selection criteria may comprise the information that can be gained from the one or more service request messages, e.g., the type of service that is requested (two party voice conversation, conference, multimedia), the time (high charge working hours, low charge night hours) and/or the day (working day, weekend, holiday) when the service is intended, the subscribers and terminals involved in the service, the destination address and the origin address of the service (local, long distance, abroad), etc.

In a preferred embodiment, the server associated with the application provider sends a polling message to one or more providers of said one or more access networks, i.e., the NAPs. The purpose of the polling message is to request from the NAPs information concerning network service parameters like available quality of service and/or utilisation charges. When a NAP receives a polling message from the ASP, he will reply the requested information to the ASP. Preferably, the ASP has contracts with the different NAPs, so he knows about the different charges related to the respective access networks. Preferably, the cooperation between the application provider and the NAPs operating the access networks is based on SLAs (= Service Level Agreements) between the ASP and the NAPs involved, concerning the possibility to poll information regarding charges and quality of service of a specific path. The server associated with the application provider then takes into account this information received in reply to said polling message from the one or more providers of said one or more access networks for said selection of a path via the one access network.

According to another preferred embodiment of the invention, the service provided by the application service provider can be requested by means of a service request message based on the SIP protocol. Therefore, the subscriber triggers his terminal to generate a SIP-based service request message and send this service request message to the server associated with the application provider for the request of the real-time service. Preferably, the access networks and the network where the application service is provided are capable to transport IP-based messages, and constitute an IP-based environment comprising, e.g., WLAN, the public Internet, 3G, NGN, TISPAN/IMS, etc.

Preferably, the subscriber using the terminal triggers the terminal to send said service request messages via all access networks available to the ASP. At first, every available access network is used, independently of the compatibility of the access network with the real-time service or the relationship of the access network with the application provider. It is only after reception of the service request messages by the server that the server makes an assessment and discards inappropriate access networks. If the server realises that a specific access network is not suitable to handle a requested service or is incompatible with the service, the server rejects this access network without gathering service-related information like cost or quality about this access network.

These as well as further features and advantages of the invention will be better appreciated by reading the following detailed description of presently preferred exemplary embodiments taken in conjunction with accompanying drawings of which:
- Fig. 1: is a block diagram of an access to a real-time service according to an embodiment of the invention.
- Fig. 2: is a block diagram of an access to a real-time service according to another embodiment of the invention.
- Fig. 3: is a block diagram of an access to a real-time service according to still another embodiment of the invention.

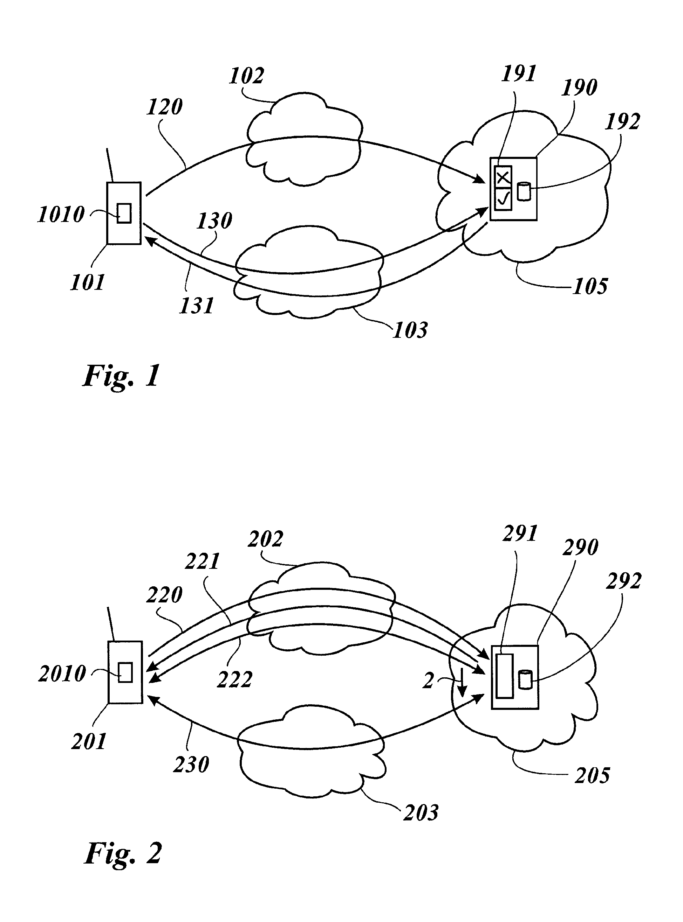

Fig. 1 shows a subscriber terminal 101 with a control unit 1010 having connectivity to a first access network 102 and to a second access network 103. The access networks 102 and 103 may be operated by different network providers and vary in technology. For example, the first access network 102 is a WLAN and the second access network 103 is a DSL connection.

The subscriber terminal 101 is a multi-homed device. The term "multi-homed" indicates that the terminal 101 comprises several network interfaces, is connected to two or more networks and has two or more network addresses. For example, the subscriber terminal 101 is connected both to the WLAN access network 102 and the DSL network 103. An application controlled by the control unit 1010 on the multi-homed multi-service terminal 101 is equipped with a logic to set up a session using multiple parallel service request messages to set up a session over all available access networks 102, 103. The terminal 101 comprises a man-machine-interface with input means and output means and a processor for control of the functions of the terminal 101.

The access networks 102 and 103 provide the subscriber terminal 101 with access to a home network 105 hosting a server 190 associated with an application service provider. The server 190 comprises a customer service logic 191 contained, e.g. within a processor unit, and a memory unit 192. In a server based network, there are computers set up to be primary providers of services. The computers providing the service are called servers and the entities that request and use the service, i.e., the subscriber terminals, are called clients.

The server 190 is composed of one or several inter-linked computers, i.e., a hardware platform, a software platform basing on the hardware platform and several application programs executed by the system platform formed by the software and hardware platform. The functionalities of the server 190 are provided by the execution of these application programs. The application programs or a selected part of these application programs constitute a computer software product providing an access network selection service as described in the following, when executed on the system platform. Further, such computer software product is constituted by a storage medium 192 storing these application programs or said selected part of application programs.

The subscriber associated with the multi-homed terminal 101 has subscribed to the "access network selection service" offered by the application provider operating the server 190. A user agent client (= UAC) installed on the control unit 1010 of the terminal 101 initiates two SIP INVITE messages 120 and 130 which are sent via the two access networks 102 and 103 to the server 190. A network interface of the server receives the two SIP INVITE messages 120 and 130 and forwards them to the customer service logic 190. The customer service logic 190 determines on receipt of the two SIP INVITE messages 120 and 130 that the "best suited" access network for the requested service is the access network 103. The selection is made on the basis of the service requested, the service conditions offered by the access network providers, and the preferences specified by the subscriber and/or the application provider. According to the selection of the access network, the server 190 terminates the service request message 120 received via the other access network 102, using appropriate SIP messages (e.g. "503 - service unavailable"), and processes only the service request message 130 received via the determined access network 103 selected as "best suited" access network.

The server 190 replies only to the service request message 130 received via the determined access network 103. The server 190 sends a 200 OK response message 131 via the selected access network 103 back to the UAC of the terminal 101. After the terminal 101 has acknowledged the response message 131, the session requested by the terminal 101 is established via the selected access network 103. Then the data exchange between the terminal 101 and the session partner of the terminal 101 can start by using a data exchange protocol, e.g., RTP (= Real-time transmission protocol).

Fig. 2 shows another embodiment of the present invention. The initial situation is similar to the initial situation aforementioned with regard to Fig. 1. Fig. 2 shows a multi-homed subscriber terminal 201 with a control unit 2010 having connectivity to a first access network 202 and to a second access network 203. The access networks 202 and 203 may be operated by different network providers and vary in technology.

The access networks 202 and 203 provide the subscriber terminal 201 with access to a home network 205 hosting a server 290 associated with an application service provider. The server 290 comprises a customer service logic 291 contained, e.g., within a processor unit, and a memory unit 292. The memory unit 292 stores a computer program product executing the steps for selection of a "best suited" access network when executed on the customer service logic 291.

The subscriber associated with the multi-homed terminal 201 has subscribed to the "access network selection service" offered by the application provider operating the server 290. A user agent client (= UAC) installed on the control unit 2010 of the terminal 201 selects one of the two access networks 202 and 203, initiates a SIP INVITE message 220 and sends it via the selected access network 202 to the server 290. The selection done by the UAC may be arbitrarily or the terminal is not capable to send parallel multiple service requests. A network interface of the server receives the SIP INVITE message 220 and forwards it to the customer service logic 291. The customer service logic 291 replies to the SIP INVITE message 220 with a "200-OK" message 221 to the subscriber terminal 201, sent via the access network 202 used for the transmission of the SIP INVITE message 220, and initiates the establishment of a session between the terminal 201 and the provider providing the requested service on a routing path 222 (for signalling and media traffic, SIP & RTP) comprising the access network 202

In parallel to the processing of the received SIP INVITE message 220, the customer service logic 291 determines the "best suited" access network for the requested service. For example, the customer service logic 291 finds out that the access network 203 would be the "best suited" access network for the requested service, e.g., on account of the cost or the quality associated with the access network 203. Accordingly, the server 290 transfers 2 the routing path used by the on-going session from the route 222 via the first access network 202 to a route 230 via the second access network 203 determined as "best suited" access network. The session path transfer 2 is executed by applying session-mobility means, e.g., a session hand-over method, to the ongoing session.

For the selection/determination process of the "best suited" access network, i.e., the access network best suiting the subscriber needs and preferences, the customer service logic 291 gathers information that represent the basis for a selection algorithm. For example, the customer service logic 291 triggers the transmission of polling messages to the access networks 202, 203. The polling messages prompt the providers of the access networks 202, 203 to reply their service conditions with respect to the service requested by the subscriber in the SIP INVITE message 220.

The customer service logic 291 accesses the memory unit 292 which comprises a subscriber data base, an application provider data base, and a network provider data base. The subscriber remotely accesses the subscriber data base, e.g., via a service telephone number or via the Internet, and sets preferences for his services. For example, the subscriber defines that he wants the cheapest access network when doing a local telephone call but attaches importance to a good audio quality when calling abroad. Similarly, the application provider remotely accesses the application provider data base and defines preferences for the service offered. For example, the application provider recommends to use an access network guaranteeing a specific bandwidth when accessing his service. And the network provider data base is remotely accessed by the providers of the access networks. The providers of the access networks upload the terms of use and the usage conditions, e.g., the QoS and the charges, of their access networks to the network provider data base.

The customer service logic 291 gathers the entirety of this data and uses it as the basis for the selection process executed by the customer service logic 291. The customer service logic 291 analyses the gathered data and comes to a decision. Preferably, the customer service logic 291 runs a selection algorithm which adjusts the importance that is allocated to specific parameters, e.g., to quality, costs, speed, bandwidth, etc. Finally, the result of the selection process is a "best suited" access network. As aforementioned, the customer service logic 291 determines that the access network 203 is the "best suited" access network for the requested service. Thus, the customer service logic 291 triggers the server 2 to initiate a re-routing of the on-going session so that all session-related traffic is routed via the "best suited" access network 203, and not any more via the initially chosen access network 202.

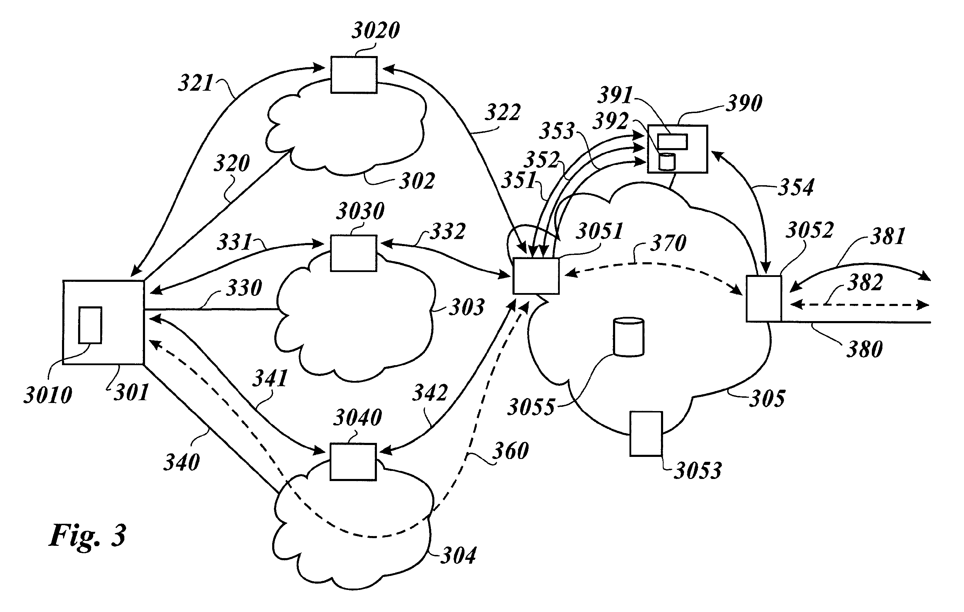

Fig. 3 gives a detailed description of still another embodiment of the present invention. A subscriber uses a multi-service terminal 301 comprising three "virtual" terminals, each "virtual" terminal having a parallel connection 320, 330, 340 to a different access network 302, 302, 304 of different access network operators. This parallel connectivity may be achieved, e.g., with multiple IP stacks. The operation of the three "virtual" terminals is controlled by a control unit 3010 of the terminal 301.

The access networks 302, 302, 304 provide the subscriber terminal 301 with access to a real-time service located in a home network 305 of an application service provider. Each of the access networks 302, 302, 304 has a network node 3020, 3030, 3040, e.g., a P-CSCF, for control of a session (P-CSCF = Proxy Call Session Control Function).

The home network 305 of an application service provider comprises a first SBC 3051, a second SBC 3052, another network node 3053, a HSS 3055, and a CSCF 390 with a customer service logic unit 391 and a memory unit 392.

A UAC application on the multi-homed multi-service terminal 301 is equipped with a logic using multiple parallel SIP INVITE messages 321, 331, 341 to set up a session over all available access networks 302, 302, 304 using the respective terminals, i.e., three "virtual" terminals on the one hardware terminal 301 as a multi-service terminal. For instance, the subscriber attempts to set up a SIP based conversational real-time service session such as a VolP call or a MMoIP call with a called party whereby the conversational real-time service is provided by the application service provider. For the initiation of this session, the subscriber connects to his available access networks 302, 302, 304 using the appropriate "virtual" terminals.

The network nodes 3020, 3030, 3040 of the access networks 302, 302, 304 relay the SIP INVITE messages 321, 331, 341 and send them as SIP INVITE messages 322, 332, 342 to the first SBC 3051 of the home network 305. The first SBC 3051 forwards the SIP INVITE messages 322, 332, 342 as signalling messages 351, 352, 353 to the CSCF 390 where the signalling messages 351, 352, 353 are analysed by the customer service logic unit 391. The customer service logic unit 391 realises that the subscriber wants to use the "access network selection service" offered by the application provider.

The customer service logic unit 391 of the ASP, receiving all parallel INVITE messages then decides which of the offered access networks to select. The selection is made on the basis of the service requested, the service conditions offered by the access network providers, and the preferences specified by the subscriber and/or the application provider. The customer service logic 390 identifies the type of the service request messages 321, 331, 341 and the origin terminal 301 from the service request messages 321, 331, 341. The application service provider has contracts with each of the access networks 302, 303, 304, i.e., the application service provider can provide his service via any of the access networks 302, 302, 304. The application service provider also has access to a user data base 3055, e.g., installed within a Home Subscriber Server, where a subscriber profile for the service is stored. In the user data base 3055, the subscriber can, e.g., set preferences about the service selection, like always cheapest connection, always best quality, etc.

The memory unit 392 of the CSCF 390 stores a software program dedicated to the access network selection and which executes the described selection and access initiation steps according to the invention when run by the customer service logic unit 391.

This results in processing one of the INVITE messages, i.e., the one 341 sent via the access network 304, while terminating the other two 321, 331 sent via the access networks 302, 303.

After the selection of a preferred access network, the CSCF 390 forwards the selected signalling message 354 to the second SBC 3052 from where a corresponding signalling message 381 is sent via a connection 380 to the called party (not shown). Once the called party signals that he wants the session to be established, the session is established via the selected access network 304 on a path comprising the media path sections 360, 370 and 380, e.g. using the RTP protocol.

## Claims

1. A method of providing a subscriber having connectivity to a plurality of two or more access networks (302, 303, 304) with an access to a real-time service provided by an application provider, whereby said access is via one (304) of the plurality of access networks (302, 303, 304),
**characterized in**
**that** the method comprises the steps of:
sending one or more service request messages (321, 331, 341) from the subscriber via one or more of the plurality of access networks (302, 303, 304) to the application provider;
selecting by the application provider one access network (304) of the plurality of access networks (302, 303, 304); and
establishing the access to the real-time service via the selected access network (304).

2. The method of claim 1,
**characterized in**
**that** the method comprises the further steps of:
sending via each of the plurality of access networks (302, 303, 304) a service request message (321, 331, 341) from the subscriber to the application provider; and
after selection of said one access network (304), processing the service request message (342) received via said selected access network (304) and terminating the service request messages (322, 332) received via the other access networks (302, 303).

3. The method of claim 1,
**characterized in**
**that** the method comprises the further steps of:
sending via one (202) of the plurality of access networks (202, 203) a service request message (220) from the subscriber to the application provider;
establishing a service session corresponding to the sent service request message (220) between the subscriber and application provider on a route (222) via said one access network (202) used for the sending of the service request message (220); and
after selection of said one access network (203), transferring (2) the route of the service session from said one access network (202) used for the sending of the service request message (220) to the selected access network (203).

4. The method of claim 1,
**characterized in**
**that** the method comprises the further step of:
on receipt of the one or more service request messages (321, 331, 341), selecting by a server (390) of the application provider said one access network (304) based on subscriber preferences and/or provider preferences stored in a data base (3055) and/or based on information about the one or more service request messages (321, 331, 341).

5. The method of claim 1,
**characterized in**
**that** the method comprises the further steps of:
sending a polling message regarding a quality of service and/or a charge from the application provider to one or more providers of said one or more access networks (302, 303, 304); and
respecting information provided in reply to said polling message by the one or more providers of said one or more access networks (302, 303, 304) for said selection of the one access network (304).

6. The method of claim 1,
**characterized in**
**that** the method comprises the further step of:
generating the one or more service request messages (321, 331, 341) based on the SIP protocol for the request of the real-time service in an IP-based environment.

7. The method of claim 1,
**characterized in**
**that** the method comprises the further step of:
sending said service request messages (321, 331, 341) via all access networks (302, 303, 304) available to the subscriber independently of the compatibility of the access networks (302, 303, 304) with the real-time service or the relationship of the access networks (302, 303, 304) with the application provider.

8. A subscriber terminal (101, 201, 301) having connectivity to a plurality of two or more access networks (102, 103, 202, 203, 302, 303, 304) for providing a subscriber with an access to a real-time service provided by an application provider, whereby said access is via one (103, 203, 304) of the plurality of access networks (302, 303, 304),
**characterized in**
**that** the subscriber terminal (101, 201, 301) comprises a control unit (1010, 2010, 3010) adapted to send one or more service request messages (120, 130, 220, 321, 331, 341) via one or more of the plurality of access networks (102, 103, 202, 203, 302, 303, 304) to the application provider for initiating a selection of one access network (103, 203, 304) of the plurality of access networks (102, 103, 202, 203, 302, 303, 304) by the application provider and an establishment of the access to the real-time service via the selected access network (103, 203, 304).

9. A server (390) associated with an application provider for providing a subscriber having connectivity to a plurality of two or more access networks (302, 303, 304) with an access to said real-time service, whereby said access is via one (304) of the plurality of access networks (302, 303, 304),
**characterized in**
**that** the server (390) comprises a customer service logic unit (391) adapted to select, after a reception of one or more service request messages (321, 331, 341) from the subscriber via one or more of the plurality of access networks (302, 303, 304), one access network (304) of the plurality of access networks (302, 303, 304) and initiate the establishment of the access to the real-time service via the selected access network (304).

10. A computer program product for providing a subscriber having connectivity to a plurality of two or more access networks (302, 303, 304) with an access to a real-time service provided by an application provider, whereby said access is via one (304) of the plurality of access networks (302, 303, 304),
**characterized in**
**that** the computer program product, when executed by a server (390) of the application provider, performs the steps of:
selecting one access network (304) of the plurality of access networks (302, 303, 304) after receipt of one or more service request messages (321, 331, 341) from the subscriber via one or more of the plurality of access networks (302, 303, 304) by the application provider; and
initiating the establishment of the access to the real-time service via the selected access network (304).
